# EUROPEAN PATENT APPLICATION

(11) **EP 1 961 784 A1**
(43) Date of publication of application: **27.08.2008**
(21) Application number: 06834767.3
(22) Date of filing: 15.12.2006
(51) Int. Cl.: C08J 9/36, B01D 71/78, B01D 71/82, B01J 43/00, B01J 47/12, C02F 1/44

(54) **HYDROPHILIC COMPOSITE MICROPOROUS MEMBRANE AND METHOD FOR PRODUCING SAME**

(30) Priority: 15.12.2005 JP 2005362194; 15.12.2005 JP 2005362195
(71) Applicant: Tonen Chemical Corporation, Tokyo 108-8005 (JP)
(72) Inventor: KIMISHIMA, Kotaro, Yokohama-shi, Kanagawa 2350022 (JP)
(74) Representative: Strehl Schübel-Hopf & Partner
(86) International application number: PCT/JP2006/325024
(87) International publication number: WO 2007/069714

(57) **Abstract**

A hydrophilic, composite, microporous membrane having an anion exchange group and a cation exchange group on the outer surface or pore surface of a microporous, thermoplastic resin membrane substrate has excellent water permeability, mechanical strength, fine-particles-removing properties, anion-removing properties and cation-removing properties.

## Description

### FIELD OF THE INVENTION

This invention relates to a hydrophilic, composite, microporous membrane and its production method, particularly to a hydrophilic, composite, microporous membrane having anion exchange groups and cation exchange groups and its production method.

### BACKGROUND OF THE INVENTION

In a system for producing ultra-pure water for washing semiconductors, etc., reverse osmosis filtration membranes, ultrafiltration membranes, microfiltration membranes, etc. are used to remove impurities. The system for producing ultra-pure water generally comprises a pretreatment system, a primary water-purifying system and a secondary water-purifying system (sub-system). In the pretreatment system, suspending materials and colloidal materials are removed from water by coagulation sedimentation, ultrafiltration, microfiltration, etc. The pretreated water is supplied to the primary water-purifying system equipped with a reverse osmosis filtration membrane apparatus, an ion exchange apparatus, a degassing apparatus, etc., to remove almost all ion components and total organic carbons (TOC). TOC contained in a trace amount in water supplied to the sub-system is decomposed by oxidation in an ultraviolet-oxidizing apparatus, and decomposition products are removed by the ion exchange apparatus. Ultra-fine particles not removed by the ion exchange apparatus are removed by the ultrafiltration filtration membrane apparatus.

Ultra-pure water thus produced is supplied to the use site for washing semiconductors, etc. However, recent dramatic increase in the degree of integration of semiconductors has made the patterns and sizes of semiconductors smaller, so that slight contamination in pipes and equipments from the sub-system to the use site has become unnegligible. Thus proposed is the removal of trace amounts of ions and fine particles immediately upstream of the use site.

For instance, JP 8-89954 A proposes a system comprising a module containing hollow, microporous membrane fibers having high-molecular chains having ion exchange groups immediately upstream of a use site. However, the hollow, microporous membrane fibers of this reference have only one of an anion exchange group, a cation exchange group and a chelate-forming group as an ion exchange group. Because impurities at the use site, though in trace amounts, cannot easily be identified, the module system of JP 8-89954 A cannot necessarily remove all impurities.

JP 9-141262 A proposes a filter system disposed immediately upstream of a use site, the filter system comprising a module containing a single-layer membrane, a module containing a laminate membrane, or series-connected modules each containing a single-layer membrane, which are properly selected from an anion-exchange-group-having membrane, a cation-exchange-group-having membrane, a chelate-exchange-group-having membrane and an ultrafiltration membrane, depending on components to be removed.

However, it is difficult to identify impurities immediately upstream of the use site. To remove all impurities using the filter system of JP 9-141262 A, it is necessary to use a module containing all of the above membranes, or series-connect a large number of modules each containing a single-layer membrane. This leads to drastic decrease in water permeability. To cope with this problem, a booster pump may be used, but it undesirably causes contamination again.

### OBJECT OF THE INVENTION

Accordingly, an object of this invention is to provide a hydrophilic, composite, microporous membrane having excellent water permeability, mechanical strength, fine-particles-removing properties, anion-removing properties and cation-removing properties, and its production method.

### DISCLOSURE OF THE INVENTION

As a result of intense research in view of the above object, the inventors have found that a hydrophilic, composite, microporous membrane having excellent water permeability, mechanical strength, fine-particles-removing properties, anion-removing properties and cation-removing properties can be obtained by introducing an anion exchange group and a cation exchange group onto the outer surface or pore surface of a microporous, thermoplastic resin membrane substrate. This invention has been completed based on such finding.

Thus, the hydrophilic, composite, microporous membrane of this invention has an anion exchange group and a cation exchange group on the outer surface or pore surface of a microporous, thermoplastic resin membrane substrate.

The anion exchange group is preferably any one of primary to quaternary amino groups and heterocyclic amine groups, quaternary amino group more preferably. The cation exchange group is preferably a sulfonic acid group or a carboxyl group.

The first method for producing a hydrophilic, composite, microporous membrane according to this invention comprises the steps of graft-polymerizing a microporous, thermoplastic resin membrane substrate with an unsaturated glycidyl compound, and then bonding an anion exchange group and a cation exchange group to an epoxy group in the resultant polymer. In a preferred example of the first method, part of epoxy groups in the graft-polymerized, unsaturated glycidyl compound are reacted with amine or ammonia, and the unreacted epoxy group is reacted with sulfate and/or sulfite.

The second method for producing a hydrophilic, composite, microporous membrane according to this invention comprises the steps of graft-polymerizing a microporous, thermoplastic resin membrane substrate with an anion-exchange-group-containing unsaturated monomer and a cation-exchange-group-containing unsaturated monomer. In a preferred example of the second method, the substrate is graft-polymerized with an anion-exchange-group-containing unsaturated monomer, and then with a cation-exchange-group-containing unsaturated monomer.

The third method for producing a hydrophilic, composite, microporous membrane according to this invention comprises the steps of (i) graft-polymerizing a microporous, thermoplastic resin membrane substrate with an unsaturated glycidyl compound, bonding an anion exchange group to an epoxy group in the resultant polymer, and then graft-polymerizing the resultant anion-exchange-group-containing substrate with a cation-exchange-group-containing unsaturated monomer, or (ii) graft-polymerizing a microporous, thermoplastic resin membrane substrate with an unsaturated glycidyl compound and a cation-exchange-group-containing unsaturated monomer, and then bonding an anion exchange group to an epoxy group in the resultant polymer.

The fourth method for producing a hydrophilic, composite, microporous membrane according to this invention comprises the steps of (i) graft-polymerizing a microporous, thermoplastic resin membrane substrate with an unsaturated glycidyl compound and an anion-exchange-group-containing unsaturated monomer, and then bonding a cation exchange group to an epoxy group in the resultant polymer, or (ii) graft-polymerizing a microporous, thermoplastic resin membrane substrate with an unsaturated glycidyl compound, bonding a cation exchange group to an epoxy group in the resultant polymer, and then graft-polymerizing the resultant cation-exchange-group-containing substrate with an anion-exchange-group-containing unsaturated monomer.

The fifth method for producing a hydrophilic, composite, microporous membrane according to this invention comprises the steps of graft-polymerizing a microporous, thermoplastic resin membrane substrate with an unsaturated glycidyl compound, bonding an anion exchange group to an epoxy group in the resultant polymer, and then subjecting the resultant anion-exchange-group-containing substrate to a plasma gas treatment or a corona discharge treatment to form a carboxyl group.

The sixth method for producing a hydrophilic, composite, microporous membrane according to this invention comprises the steps of graft-polymerizing a microporous, thermoplastic resin membrane substrate with an anion-exchange-group-containing unsaturated monomer, and then subjecting the resultant anion-exchange-group-containing substrate to a plasma gas treatment or a corona discharge treatment to form a carboxyl group.

### DESCRIPTION OF THE PREFERRED EMBODIMENTS

[1] Substrate

The substrate of the hydrophilic, composite, microporous membrane is a microporous, thermoplastic resin membrane.

(1) Thermoplastic resins

The thermoplastic resins include polyolefin resins, olefin-halogenated olefin copolymer resins, fluororesins, polysulfone resins, polycarbonate resins, polyester resins, polyamide resins, polyarylene ether resins, polyarylene sulfide resins, etc. Among them, the polyolefin resins, the olefin-halogenated olefin copolymer resins and the fluororesins are preferable.

The polyolefin resins can be homopolymers or copolymers of ethylene, propylene, butene-1, pentene-1, hexene-1, 4-methylpentene-1, octene, vinyl acetate, methyl methacrylate, styrene, etc. The fluororesins can be polyvinylidene fluoride, polytetrafluoroethylene, tetrafluoroethylene-perfluoroalkyl vinyl ether copolymers, tetrafluoroethylene -hexafluoropropylene-perfluoropropyl vinyl ether copolymers, tetrafluoroethylene-hexafluoropropylene copolymers, ethylene -tetrafluoroethylene copolymers, etc.

The thermoplastic resins are preferably polyolefin resins, more preferably polyethylene resins described below, because of excellent mechanical strength. The polyethylene resins can be (a) ultra-high-molecular-weight polyethylene, (b) polyethylene other than the ultra-high-molecular-weight polyethylene, or (c) a mixture of ultra-high-molecular-weight polyethylene with the other polyethylene (polyethylene composition). In any case, the polyethylene resins have mass-average molecular weight (Mw) of preferably 1 x 10⁴ to 1 x 10⁷, more preferably 5 x 10⁴ to 15 x 10⁶, most preferably 1 x 10⁵ to 5 x 10⁶, though not particularly critical.

(a) Ultra-high-molecular-weight polyethylene

The ultra-high-molecular-weight polyethylene has Mw of 5 x 10⁵ or more. The ultra-high-molecular-weight polyethylene can be an ethylene homopolymer, but also an ethylene-α-olefin copolymer containing a small amount of another α-olefin. The other α-olefins than ethylene are preferably propylene, butene-1, pentene-1, hexene-1, 4-methylpentene-1, octene-1, vinyl acetate, methyl methacrylate, and styrene. The Mw of the ultra-high-molecular-weight polyethylene is preferably 5 x 10⁵ to 1 x 10⁷, more preferably 1 x 10⁶ to 15 x 10⁶, particularly 1 x 10⁶ to 5 x 10⁶.

(b) Polyethylene other than ultra-high-molecular-weight polyethylene

The polyethylene other than the ultra-high-molecular-weight polyethylene has Mw of 1 x 10⁴ or more and less than 5 x 10⁵, being preferably high-density polyethylene, medium-density polyethylene, branched low-density polyethylene and linear low-density polyethylene, more preferably high-density polyethylene. The polyethylene having Mw of 1 x 10⁴ or more and less than 5 x 10⁵ can be not only an ethylene homopolymer, but also a copolymer containing a small amount of another α-olefin such as propylene, butene-1, hexene-1, etc. Such copolymers are preferably produced using single-site catalysts.

(c) Polyethylene composition

The polyethylene composition is a mixture of ultra-high-molecular-weight polyethylene having Mw of 5 x 10⁵ or more, and the other polyethylene having Mw of 1 x 10⁴ or more and less than 5 x 10⁵ (at least one selected from the group consisting of high-density polyethylene, medium-density polyethylene, branched low-density polyethylene and linear low-density polyethylene). The ultra-high-molecular-weight polyethylene and the other polyethylene may be the same as above. The molecular weight distribution [mass-average molecular weight/number-average molecular weight (Mw/Mn)] of this polyethylene composition can be easily controlled depending on applications. The polyethylene composition is preferably a composition of the above ultra-high-molecular-weight polyethylene and the above high-density polyethylene. The amount of the ultra-high-molecular-weight polyethylene is preferably 1% or more by mass, more preferably 2 to 50% by mass, based on 100% by mass of the entire polyethylene composition.

(d) molecular weight distribution Mw/Mn

Mw/Mn is a measure of the molecular weight distribution, and the larger this value is, the wider the molecular weight distribution is. The Mw/Mn of the polyethylene resin is preferably 5 to 300, more preferably 10 to 100, though not critical, when the polyethylene resin is any one of (a)-(c) above. The Mw/Mn of the polyethylene (homopolymer or ethylene -α-olefin copolymer) can be properly controlled by a multi-stage polymerization method. The Mw/Mn of the polyethylene composition can be properly controlled by the molecular weights and mixing ratio of components.

(2) Desired properties of microporous, thermoplastic resin membrane

Though not particularly critical, the pore structure of the microporous, thermoplastic resin membrane is preferably a three-dimensional network structure (three-dimensionally and irregularly connected network structure) to obtain excellent fine-particles-removing properties and ion-removing properties. The average pore size is preferably 0.005 to 0.5 µm. When the average pore size is less than 0.005 µm, it is difficult to introduce ion exchange groups (anion exchange group, cation exchange group and chelate-forming group), resulting in low water permeability after the ion exchange groups are introduced. When the average pore size is more than 0.5 µm, low fine-particles-removing properties are obtained. The average pore size is determined from a pore size distribution curve, which is obtained by the measurement of a pore size distribution by mercury intrusion porosimetry.

Though not critical, the air permeability (JIS P8117), which is converted to the value at 20-µm thickness, is preferably 30 to 400 sec/100 ml. When the air permeability is less than 30 sec/100 ml, the membrane has low mechanical strength and large pore size, resulting in poor fine-particles-removing properties. When the air permeability is more than 400 sec/100 ml, the membrane having ion exchange groups introduced has low water permeability and air permeability, unsatisfactory for practical applications. Though not critical, the porosity is preferably 25 to 80%. When the porosity is less than 25%, the membrane having ion exchange groups introduced has low water permeability and air permeability. On the other hand, the porosity of more than 80% provides low mechanical strength. Though not critical, the pin puncture strength, which is converted to the value at 20-µm thickness, is preferably 1,000 mN (102 gf) or more.

(3) Production method of microporous, thermoplastic resin membrane

The production method of the above microporous, thermoplastic resin membrane comprises, for instance, the steps of (a) melt-blending the above thermoplastic resin and membrane-forming solvent, (b) extruding the resultant resin solution through a die lip, (c) cooling the resultant extrudate to form a gel-like sheet, (d) stretching the gel-like sheet (first stretching), (e) removing the membrane-forming solvent, (f) drying the membrane, (g) stretching the dried membrane again (second stretching), and (h) heat-treating the stretched membrane, though not critical.

(a) Melt blending

The melt blending is preferably conducted in the extruder. The melt-blending methods are described in Japanese Patents 2132327 and 3347835.

(b) Extrusion

The melt-blended resin solution is extruded from the extruder through a die. The extrusion method is described in Japanese Patent 2132327.

(c) Formation of gel-like sheet

An extrudate from the die is cooled to form a gel-like sheet. The method for forming the gel-like sheet is described in Japanese Patent 2132327.

(d) First stretching

The gel-like sheet is stretched at least monoaxially. The stretching causes cleavage between thermoplastic resin crystal lamellas, making the thermoplastic resin phase finer with larger numbers of fibrils. The fibrils form a three-dimensional network structure (three-dimensionally and irregularly connected network structure). Because the stretching method is described in Japanese Patent 2132327, its detailed explanation will be omitted.

(e) Removal of membrane-forming solvent

A washing solvent is used to remove (wash away) the membrane-forming solvent. The methods for removing the membrane-forming solvent with a washing solvent are described in Japanese Patent 2132327 and JP 2002-256099 A.

(f) Drying of membrane

The microporous, thermoplastic resin membrane obtained by removing the membrane-forming solvent is then dried by a heat-drying method, a wind-drying method, etc.

(g) Second stretching

The dried membrane is preferably stretched again at least monoaxially. The second stretching can be conducted by a tenter method, etc., while heating the membrane. The second stretching may be monoaxial or biaxial. In the case of biaxial stretching, both simultaneous biaxial stretching and sequential stretching can be used, though the simultaneous biaxial stretching is preferable.

The second stretching temperature is preferably in a range from the crystal dispersion temperature Tcd of the substrate-forming thermoplastic resin to (Tcd + 40°C), more preferably (Tcd + 10°C) to (Tcd + 40°C). The second stretching temperature exceeding (Tcd + 40°C) provides low water permeability and air permeability, and large unevenness in properties, particularly air permeability, in a sheet width direction when stretched in a transverse direction (TD). The second stretching temperature of lower than Tcd provides insufficient softening of the thermoplastic resin, making it likely that breakage occurs when the membrane is stretched, thus failing to achieve uniform stretching. When the thermoplastic resin is a polyethylene resin, the stretching temperature is usually in a range from 90°C to 140°C, preferably in a range from 100°C to 130°C.

The second stretching magnification is preferably 1.1 to 2.5-fold in one direction. In the case of monoaxial stretching, it is 1.1 to 2.5-fold in a longitudinal direction (MD) or in TD. In the case of biaxial stretching, it is 1.1 to 2.5-fold in both MD and TD. In the case of biaxial stretching, the stretching magnifications in MD and TD may be the same or different, as long as they are 1.1 to 2.5-fold, although they are preferably the same. The magnification of less than 1.1-fold provides insufficient water permeability and air permeability. On the other hand, the magnification of more than 2.5-fold makes the breakage of the membrane highly likely and provides undesirably low heat shrinkage resistance. The second stretching magnification is more preferably 1.1 to 2.0-fold.

The second stretching speed is preferably 3%/second or more in a stretching direction. In the case of monoaxial stretching, it is 3%/second or more in MD or TD. In the case of biaxial stretching, it is 3%/second or more in both MD and TD. The stretching speed (%/second) in a stretching direction is a percentage of the elongation of the membrane in a second stretching region per 1 second relative to the length (100%) before the second stretching. The stretching speed of less than 3%/second provides low water permeability and air permeability, and large unevenness in properties, particularly air permeability, in a sheet width direction in the stretching in TD. The second stretching speed is preferably 5%/second or more, more preferably 10%/second or more. In the case of biaxial stretching, the stretching speed may be different in MD and TD as long as it is 3%/second or more in each of MD and TD, though the same stretching speed is preferable. Though not critical, the upper limit of the second stretching speed is preferably 50%/second to prevent the breakage of the membrane.

(h) Heat treatment

The membrane after second stretching is preferably heat-treated. The heat treatment may be heat-setting and/or annealing. These methods are described, for instance, in JP 2002-256099 A.

(i) Other steps

Before removing the membrane-forming solvent from the gel-like sheet, any one of a heat-setting step, a hot roll treatment step, in which the stretched gel-like sheet is brought into contact with at least one surface of a hot roll, and a hot solvent treatment step, in which the stretched gel-like sheet is brought into contact with a hot solvent, can be conducted. The heat-setting treatment can be conducted by the above known method. The hot roll treatment can be conducted by the method described in Japanese Application 2005-271046. The hot solvent treatment can be conducted by the method described in WO 2000/20493.

[2] Ion exchange groups

The hydrophilic, composite, microporous membrane has an anion exchange group and a cation exchange group on the outer surface or pore surface of the above microporous, thermoplastic resin membrane substrate. The hydrophilic, composite, microporous membrane preferably has both ion exchange groups on both outer surface and pore surface of the substrate.

(1) Anion exchange group

The anion exchange group is preferably any one of primary amino groups represented by the formula (1):

-NH₂ (1),

secondary amino groups represented by the formula (2): 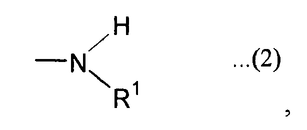 wherein R¹ is a hydrocarbon group,
tertiary amino groups represented by the formula (3): 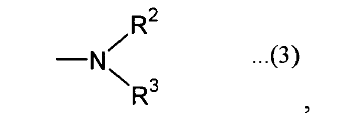 wherein R² and R³ are hydrocarbon groups,
quaternary amino groups represented by the formula (4): 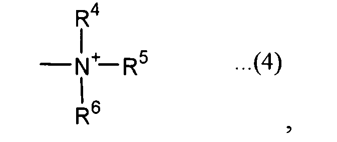 wherein R⁴ to R⁶ are hydrocarbon groups, and
heterocyclic amine groups such as pyridines, imidazoles, etc.,
more preferably strongly basic quaternary amino groups. The hydrocarbon groups (R¹ to R⁶) in the secondary to quaternary amino groups can be any one of alkyl groups, aryl groups and aralkyl groups.

The amount of the anion exchange group is preferably 0.1 milliequivalent or more, more preferably 0.2 milliequivalent or more, per 1 g of the hydrophilic, composite, microporous membrane. When this amount is less than 0.1 milliequivalent/g, insufficient anion-removing properties are obtained.

(2) Cation exchange group

The cation exchange group can be a sulfonic acid group, a carboxyl group, a phosphorus-containing acid group (for instance, a phosphoric acid group, a phosphonic acid group, etc.), etc., preferably a sulfonic acid group and a carboxyl group. The amount of the cation exchange group is preferably 0.1 milliequivalent or more, more preferably 0.2 milliequivalent or more, per 1 g of the hydrophilic, composite, microporous membrane. When this amount is less than 0.1 milliequivalent/g, insufficient cation-removing properties are obtained.

(3) Ratio of anion exchange group to cation exchange group

The ratio of the anion exchange group to the cation exchange group can properly be determined depending on the components to be removed, but the anion exchange group / cation exchange group molar ratio is preferably 10/90 to 90/10, more preferably 20/80 to 80/20.

(4) Chelate-forming group

The hydrophilic, composite, microporous membrane can have a chelate-forming group, as the other ion exchange group than the anion exchange group and the cation exchange group, if necessary. The chelate-forming group is a functional group forming a chelate with a metal ion. The chelate-forming group includes an iminodiacetate group, a mercapto group, an ethylenediamine group, etc. The ratio of the chelate-forming group is preferably 20% by mol or less per 100% by mol of all the ion exchange groups.

(5) Total amount of ion exchange groups

The total amount of the ion exchange groups (anion exchange group + cation exchange group + chelate-forming group) is preferably 10 milliequivalent or less, more preferably 5 milliequivalent or less, per 1 g of the hydrophilic, composite, microporous membrane. When this amount is more than 10 milliequivalent/g, pores are likely to close.

[3] Production method of hydrophilic, composite, microporous membrane

The method for producing a hydrophilic, composite, microporous membrane comprises the steps of (1) introducing the anion exchange group and the cation exchange group into the above microporous, thermoplastic resin membrane substrate, (2) washing it, and (3) drying it. When the tertiary amino group is introduced in the step (1), a step (4) of turning the tertiary amino group to a quaternary one is preferably conducted after the step (1). After the step (1) (before the step (4), if any), a step (5) of introducing a chelate-forming group can be conducted, if necessary.

(1) Introduction of anion exchange group and cation exchange group

(1)-1 Method of introducing anion exchange group

The introduction of the anion exchange group into the substrate can be conducted by (a) a method comprising graft-polymerizing the substrate with an unsaturated glycidyl compound, and reacting amine or ammonia with an epoxy group in the resultant polymer (first method of introducing an anion exchange group), and (b) a method comprising graft-polymerizing the substrate with an anion-exchange-group-containing unsaturated monomer (second method of introducing an anion exchange group).

(a) First method of introducing anion exchange group

(i) Graft polymerization of unsaturated glycidyl compound

The graft polymerization of the substrate with an unsaturated glycidyl compound can be conducted by a method comprising irradiating the substrate with ionizing radiation, and then reacting the substrate with an unsaturated glycidyl compound (prior-irradiation method), and a method of irradiating ionizing radiation to the substrate in contact with the unsaturated glycidyl compound (simultaneous irradiation method). Because the ionizing radiation penetrates into the substrate, the unsaturated glycidyl compound is polymerized to form side chains substantially uniformly connected to main chains of the thermoplastic resin on the outer surface and pore surface of the substrate. The ionizing radiation includes α-rays, β-rays (electron beams), γ-rays and X-rays, and electron beams and γ-rays are preferable for handling. In the case of using electron beams, the prior-irradiation method is preferable to suppress the homopolymerization of the unsaturated glycidyl compound.

When the electron beam treatment is conducted by the prior-irradiation method, the acceleration voltage of electron beams is preferably 100 to 5,000 keV, more preferably 1,000 to 4,000 keV. The irradiation of electron beams can be conducted in an air atmosphere, but preferably in an inert gas atmosphere. The amount of irradiation is 10 to 500 kGy, preferably 50 to 200 kGy. When the amount of irradiation is less than 10 kGy, the unsaturated glycidyl compound is not sufficiently grafted. When the amount of irradiation exceeds 500 kGy, the substrate is likely deteriorated.

The substrate having radicals generated by the irradiation of electron beams is brought into contact with an unsaturated glycidyl compound in a gas or liquid state. The unsaturated glycidyl compound is not particularly restricted as long as it is a compound having a glycidyl group and an unsaturated group, but it is preferably glycidyl (meth)acrylic acid. The contact of the substrate with an unsaturated glycidyl compound in a gas state can be conducted by a method comprising bubbling the evaporated unsaturated glycidyl compound in a solvent, in which the irradiated substrate is immersed (gas method). The contact of the substrate with an unsaturated glycidyl compound in a liquid state can be conducted by a method comprising immersing the irradiated substrate in a solution or dispersion of the unsaturated glycidyl compound (liquid method). In any method, water and an organic solvent can be used, but the organic solvent is preferable. The preferred organic solvents are lower alcohols such as methanol, ethanol, isopropyl alcohol (IPA), butanol, etc. A surfactant can be added to the solution or dispersion of the unsaturated glycidyl compound, if necessary.

The concentration of the solution or dispersion of the unsaturated glycidyl compound is preferably 0.1 to 20% by mass, more preferably 0.5 to 10% by mass. When this concentration is less than 0.1 % by mass, it is impossible to graft-polymerize the substrate with a sufficient amount of the unsaturated glycidyl compound. When the concentration is more than 20% by mass, it is difficult to control the amount of polymerization. The solution or dispersion of the unsaturated glycidyl compound is preferably deoxidized before the immersion of the substrate. The deoxidation can be conducted by bubbling an inert gas. An inert gas can be bubbled while the substrate is immersed, if necessary. The immersion temperature is preferably 0 to 90°C, more preferably 20 to 70°C. The treatment time is about 10 to 60 minutes, for instance, at 50°C, though different depending on the immersion temperature.

The unsaturated glycidyl compound can be graft-polymerized in the presence of a cross-linking agent, if necessary. The cross-linking agent is divinyl benzene, etc. To prevent the homopolymerization of the unsaturated glycidyl compound, a polymerization inhibitor such as Mohr's salt [iron(II) ammonium sulfate-hexahydrate] and hydroquinone monomethyl ether, IPA, ethylene dichloride, etc. can be used.

The graft ratio of the unsaturated glycidyl compound is, preferably 5 to 100% by mass, more preferably 10 to 50% by mass, based on 100% by mass of the ungrafted substrate.

(ii) Introduction of anion exchange group

The anion exchange group is bonded to an epoxy group in the polymer of the unsaturated glycidyl compound (side chains). Specifically, amine or ammonia is reacted with the epoxy group to form any one of primary to tertiary amino groups. It is preferable to use an amine to form a secondary or tertiary amino group. To form the quaternary amino group, a tertiary amino group is formed and then turned to a quaternary one. The formation of a quaternary amino group is preferably conducted after the cation exchange group is introduced.

The amines include aliphatic amines, aromatic amines, alicyclic amines, aliphatic hydroxylamines, aliphatic diamines, aromatic diamines, heterocyclic amines, etc., and aliphatic amines and heterocyclic amines are preferable from the aspect of basicity. The aliphatic amines are, for instance, methylamine, dimethylamine, ethylamine, diethylamine, n-propylamine, di-n-propylamine, n-butylamine, di-n-butylamine, n-amylamine, n-hexylamine, laurylamine, etc. The heterocyclic amines are, for instance, pyridine, imidazole, etc. They may be used alone or in combination.

To react the epoxy group with the amine, it is preferable to immerse the substrate provided with side chains in an amine solution or dispersion. The solvent may be any one of water, organic solvents and mixtures thereof. Among them, a water-lower alcohol mixed solvent is preferable. The amount of the amine introduced can be controlled by adjusting the concentration of the amine in the solution or dispersion, the immersion temperature and the treatment time. Though not critical, the amine concentration is preferably 0.5 to 15% by mass. The immersion temperature is preferably 0 to 90°C, more preferably 20 to 70°C. The treatment time is about 30 minutes to 2 hours, for instance, at 50°C, though different depending on the immersion temperature.

(b) Second method of introducing an anion exchange group

The second method comprises irradiating the substrate with ionizing radiation like the above, bringing an anion-exchange-group-containing unsaturated monomer into contact with the substrate to cause graft polymerization. The anion-exchange-group-containing unsaturated monomers include vinyl pyridine, vinyl imidazole, diallylmethylamine, allylamine, N, N-dimethyl-p-amino styrene, N, N-diethyl-p-amino styrene, vinyl amine, N, N-dimethylamino methyl (meth)acrylate, N, N-diethylaminomethyl (meth)acrylate, N, N-dimethylaminoethyl (meth)acrylate, N, N-diethylaminoethyl (meth)acrylate, etc.

The contact of the substrate with an anion-exchange-group-containing unsaturated monomer can be conducted by the gas method or the liquid method. In the case of the liquid method, the same solvent, monomer concentration, immersion temperature and treatment time can be used as in the case of graft-polymerizing the unsaturated glycidyl compound.

(1)-2 Method of introducing cation exchange group

(a) Method of introducing sulfonic acid group

The method of introducing a sulfonic acid group into the substrate includes (i) a method comprising graft-polymerizing the substrate with an unsaturated glycidyl compound, and reacting an epoxy group in the resultant polymer with a sulfate or a sulfite (first method of introducing sulfonic acid group), and (ii) a method comprising graft-polymerizing the substrate with a sulfonic-acid-group-containing unsaturated monomer (second method of introducing sulfonic acid group).

(i) First method of introducing sulfonic acid group

The first method comprises graft-polymerizing the substrate with an unsaturated glycidyl compound like the above, reacting an epoxy group in the resultant polymer (side chains) with sulfate or sulfite [simply called "sulfate (sulfite)"]. The sulfates include alkali metal sulfates such as sodium sulfate, potassium sulfate, etc. The sulfites include alkali metal sulfites such as sodium sulfite and potassium sulfite, magnesium sulfite, sodium hydrogen sulfite, potassium hydrogen sulfite, ammonium sulfite, etc. They may be used alone or in combination.

To react the sulfate (sulfite) with the epoxy group, it is preferable to immerse the substrate provided with side chains in a solution or dispersion of the sulfate (sulfite). The solvent may be the same as shown in the reaction with the amine. The concentration of the sulfate (sulfite) in the solution or dispersion is preferably 0.5 to 10% by mass. The immersion temperature is preferably 0 to 100°C, more preferably 20 to 90°C. The treatment time is about 10 to 20 hours, for instance, at 80°C, though different depending on the immersion temperature. A sulfonic acid group can be formed by reacting the epoxy group with the sulfate (sulfite), and treating it by hydrochloric acid, etc. to ion-exchange the alkali metal, etc. to a proton.

(ii) Second method of introducing sulfonic acid group

The second method comprises irradiating the substrate with ionizing radiation like the above, and graft-polymerizing it with a sulfonic-acid-group-containing unsaturated monomer. The sulfonic-acid-group-containing unsaturated monomers include vinyl sulfonic acid, p-styrene sulfonic acid, allyl sulfonic acid, methallyl sulfonic acid, butyl (meth)acrylate-4-sulfonic acid, (meth)acryloxybenzene sulfonic acid, t-butylacrylamide sulfonic acid, etc. They may be used alone or in combination.

The contact of the substrate with the sulfonic-acid-group-containing unsaturated monomer can be conducted by the gas method or the liquid method. In the case of the liquid method, the same solvent, monomer concentration, immersion temperature and treatment time can be used as in the graft polymerization of the unsaturated glycidyl compound.

(b) Method of introducing carboxyl group

The method of introducing a carboxyl group into the substrate includes (i) a method comprising graft-polymerizing the substrate with an unsaturated glycidyl compound, reacting an epoxy group in the resultant polymer with either an alkali metal-aliphatic acid salt or alkali metal hydroxycarboxylate (first method of introducing a carboxyl group), (ii) a method comprising graft-polymerizing the substrate with a carboxyl group-containing unsaturated monomer (second method of introducing a carboxyl group), and (iii) a method comprising subjecting the substrate to a plasma gas treatment or a corona discharge treatment (third method of introducing a carboxyl group).

(i) First method of introducing carboxyl group

The first method comprises graft-polymerizing the substrate with an unsaturated glycidyl compound like the above, and reacting an epoxy group in the resultant polymer (side chains) with any one of alkali metal-aliphatic acid salts and alkali metal hydroxycarboxylates. The alkali metal-aliphatic acid salts include sodium acetate, sodium propionate, sodium butyrate, sodium caproate, sodium caprylate, sodium caprate, sodium laurate, sodium myristate, sodium palmitate, sodium stearate, etc. The alkali metal hydroxycarboxylates include sodium glycolate, sodium lactate, sodium malate, sodium tartrate, sodium citrate, sodium gluconate, etc. They may be used alone or in combination.

To react the epoxy group with any one of the alkali metal-aliphatic acid salts and the alkali metal hydroxycarboxylates, the substrate graft-polymerized with the unsaturated glycidyl compound is preferably immersed in a solution or dispersion of either the alkali metal-aliphatic acid salt or the alkali metal hydroxycarboxylate. The same solvent can be used as in the reaction with the amine. The concentration of the salt in the solution or dispersion is preferably 0.5 to 10% by mass. The immersion temperature is preferably 0 to 100°C, more preferably 20 to 90°C. The treatment time is about 10 to 20 hours, for instance, at 80°C, though different depending on the immersion temperature. After the epoxy group is reacted with the alkali metal-aliphatic acid salt and/or the alkali metal hydroxycarboxylate, the substrate can be treated with hydrochloric acid, etc. to ion-exchange the alkali metal to a proton, thereby forming a carboxyl group.

(ii) Second method of introducing carboxyl group

The second method comprises irradiating the substrate with ionizing radiation like the above, and graft-polymerizing it with a carboxyl group-containing unsaturated monomer. The carboxyl group-containing unsaturated monomers include unsaturated, mono- or di-carboxylic acids such as (meth)acrylic acid, maleic acid, fumaric acid, endo-bicyclo[2.2.1]-5-heptene-2,3-dicarboxylic acid (endic acid), tetrahydrophthalic acid, itaconic acid, citraconic acid, crotonic acid and isocrotonic acid, and their derivatives, etc. Such derivatives are, for instance, anhydrides, halides, amides, imides, esters, etc. Specific examples of the derivatives are maleic anhydride, maleinyl chloride, maleimide, endic anhydride, methyl acrylate, methyl methacrylate, citraconic anhydride, monomethyl maleate, dimethyl maleate, etc. They may be used alone or in combination. Among them, (meth)acrylic acid is preferable.

The contact of the substrate with an carboxyl group-containing unsaturated monomer can be conducted by the gas method or the liquid method. In the case of the liquid method, the same solvent, monomer concentration, immersion temperature and treatment time can be used as in the graft polymerization of the unsaturated glycidyl compound.

(iii) Third method of introducing carboxyl group

The third method comprises subjecting the substrate to a plasma gas treatment or a corona discharge treatment to form a carboxyl group. Using a known a plasma gas generating apparatus, the plasma gas treatment can be conducted by exposing the substrate to a plasma gas. A plasma-generating gas is argon, helium, nitrogen, air, etc. High-frequency current for generating the plasma gas preferably has a frequency of 1 to 30 MHz, and output of 1 to 5,000 W, more preferably 100 to 3,000 W. The plasma gas is blown onto the substrate at a flow rate of preferably 0.002 to 2 L/min/cm², more preferably 0.02 to 1.2 L/min/cm².

Using a known corona discharge apparatus, the corona discharge treatment is conducted by exposing the substrate to a corona atmosphere generated. The corona discharge treatment is preferably conducted in an air atmosphere. The total amount of discharge in the corona discharge treatment is preferably 1 to 5,000 W/m²/min, more preferably 100 to 3,000 W/m²/min. The pressure in the plasma gas treatment and the corona discharge treatment can be atmospheric pressure, and the treatment time is preferably 1 to 1,000 seconds.

(1)-3 Combinations of these methods

The above anion-exchange-group-introducing method, sulfonic-acid-group-introducing method and carboxyl-group-introducing method can be properly combined to introduce any one of the anion exchange group, the sulfonic acid group and carboxyl group into the substrate.

(a) Introduction of anion exchange group and sulfonic acid group

The introduction of the anion exchange group and the sulfonic acid group into the substrate can be conducted by a combination A of the first anion-exchange-group-introducing method and the first sulfonic-acid-group-introducing method, a combination B of the second anion-exchange-group-introducing method and the second sulfonic-acid-group-introducing method, a combination C of the first anion-exchange-group-introducing method and the second sulfonic-acid-group-introducing method, and a combination D of the second anion-exchange-group-introducing method and the first sulfonic-acid-group-introducing method. Among them, the combination A is preferable.

(i) Combination A

The combination A comprises the steps of graft-polymerizing the substrate with the unsaturated glycidyl compound, and bonding the anion exchange group and the sulfonic acid group to an epoxy group in the resultant polymer. Though not critical, the anion exchange group and the sulfonic acid group are introduced preferably in this order. Namely, after part of epoxy group in the polymer of the unsaturated glycidyl compound is reacted with the amine or ammonia, the unreacted epoxy group is preferably reacted with the sulfate (sulfite), and then ion-exchanged. When the sulfonic acid group is first introduced, or when the amine or ammonia and the sulfate (sulfite) are simultaneously reacted with the epoxy group, the addition reaction of the amine or ammonia is hindered, resulting in difficulty in introducing the anion exchange group.

(ii) Combination B

The combination B comprises graft-polymerizing the substrate with the anion-exchange-group-containing unsaturated monomer and the sulfonic-acid-group-containing unsaturated monomer. Though not critical, to graft-polymerize both monomers in good balance, the anion-exchange-group-containing unsaturated monomer and the sulfonic-acid-group-containing unsaturated monomer are graft-polymerized preferably in this order. If necessary, however, the graft polymerization may be conducted in an opposite order, or both monomers may be graft-copolymerized.

When the graft polymerization of the anion-exchange-group-containing unsaturated monomer and the graft polymerization of the sulfonic-acid-group-containing unsaturated monomer are conducted by separate steps, it is preferable to conduct irradiation before each graft polymerization step. To suppress the deterioration of the substrate and the degradation of the previously introduced ion exchange group, the amount of irradiation is properly controlled. Specifically, the amount of irradiation is preferably 50 to 200 kGy. The acceleration voltage of electron beams may be the same as above. In the combination conducting irradiation plural times, the amount of each irradiation is preferably the same as above.

(iii) Combination C

The combination C includes a combination C-1 comprising graft-polymerizing the substrate with an unsaturated glycidyl compound, bonding an anion exchange group to an epoxy group in the resultant polymer, and then graft-polymerizing the resultant anion-exchange-group-containing substrate with a sulfonic-acid-group-containing unsaturated monomer, and a combination C-2 comprising graft-polymerizing the substrate with an unsaturated glycidyl compound and a sulfonic-acid-group-containing unsaturated monomer, and then bonding an anion exchange group to an epoxy group in the resultant polymer.

In the combination C-1, irradiation is preferably conducted before each graft polymerization. In the combination C-2, the irradiated substrate may be graft-copolymerized with an unsaturated glycidyl compound and a sulfonic-acid-group-containing unsaturated monomer, or graft-polymerized with an unsaturated glycidyl compound and a sulfonic-acid-group-containing unsaturated monomer in this order. The former graft copolymerization method may be essentially the same as the method of graft-polymerizing only the unsaturated glycidyl compound. In the latter sequential graft polymerization, irradiation is preferably conducted before the graft polymerization of the sulfonic-acid-group-containing unsaturated monomer.

(iv) Combination D

The combination D includes a combination D-1 comprising graft-polymerizing the substrate with an unsaturated glycidyl compound and an anion-exchange-group-containing unsaturated monomer, and then bonding a sulfonic acid group to an epoxy group in the resultant polymer, and a combination D-2 comprising graft-polymerizing the substrate with an unsaturated glycidyl compound, bonding a sulfonic acid group to an epoxy group in the resultant polymer, and then graft-polymerizing the sulfonic-acid-group-containing substrate with an anion-exchange-group-containing unsaturated monomer.

In the combination D-1, the irradiated substrate may be graft-copolymerized with an unsaturated glycidyl compound and an anion-exchange-group-containing unsaturated monomer, or graft-polymerized with an unsaturated glycidyl compound and an anion-exchange-group-containing unsaturated monomer in this order. The former graft copolymerization method may be essentially the same as the method of graft-polymerizing only the unsaturated glycidyl compound. In the latter sequential graft polymerization, irradiation is preferably conducted before the graft polymerization of the anion-exchange-group-containing unsaturated monomer. In the combination D-2, irradiation is preferably conducted before each graft polymerization.

(b) Introduction of anion exchange group and carboxyl group

The introduction of the anion exchange group and the carboxyl group into the substrate can be conducted by a combination E of the first anion-exchange-group-introducing method and the first carboxyl-group-introducing method, a combination F of the second anion-exchange-group-introducing method and the second carboxyl-group-introducing method, a combination G of the first anion-exchange-group-introducing method and the second carboxyl-group-introducing method, a combination H of the second anion-exchange-group-introducing method and the first carboxyl-group-introducing method, a combination I of the first anion-exchange-group-introducing method and the third carboxyl-group-introducing method, and a combination J of the second anion-exchange-group-introducing method and the third carboxyl-group-introducing method. Among them, the combination G, I or J is preferable.

The combinations E and H may be the same as the combinations A and D, respectively, except that the carboxyl group is introduced in place of the sulfonic acid group [either the alkali metal-aliphatic acid salt or the alkali metal hydroxycarboxylate in place of the sulfate (sulfite) is reacted with the epoxy group].

The combinations F and G may be the same as the combinations B and C, respectively, except that the carboxyl group is introduced in place of the sulfonic acid group (the carboxyl group-containing unsaturated monomer is graft-polymerized in place of the sulfonic-acid-group-containing unsaturated monomer).

The combination I comprises the steps of graft-polymerizing the substrate with an unsaturated glycidyl compound, bonding an anion exchange group to an epoxy group in the resultant polymer, and subjecting the resultant anion-exchange-group-containing substrate to a plasma gas treatment or a corona discharge treatment to form a carboxyl group. These steps may be the same as above.

The combination J comprises graft-polymerizing the substrate with an anion-exchange-group-containing unsaturated monomer, and subjecting the resultant anion-exchange-group-containing substrate to a plasma gas treatment or a corona discharge treatment to form a carboxyl group. These steps may be the same as above.

(c) Introduction of anion exchange group, sulfonic acid group and carboxyl group

When the anion exchange group, the sulfonic acid group and the carboxyl group are introduced into the substrate, the first anion-exchange-group-introducing method, the first sulfonic-acid-group-introducing method and the third carboxyl-group-introducing method are preferably combined, though not critical. Specifically, a step of graft-polymerizing the substrate with an unsaturated glycidyl compound, a step of bonding an anion exchange group and a sulfonic acid group to an epoxy group in the resultant polymer, and a step of subjecting the substrate containing the anion exchange group and the sulfonic acid group to a plasma gas treatment or a corona discharge treatment to form a carboxyl group are preferably conducted in this order. These steps may be the same as above.

(2) Washing

The substrate having the anion exchange group and the cation exchange group introduced is washed with a solvent such as water, toluene, xylene, etc. overnight.

(3) Drying

The washed membrane is dried by a heat-drying method, an air-drying method, etc., to obtain a hydrophilic, composite, microporous membrane.

(4) Turning to quaternary amine

When the tertiary amino group is introduced by the above anion-exchange-group-introducing method, it is preferable to turn the tertiary amino group to a quaternary one, a stronger basic group, before washing and drying. To turn the tertiary amino group to a quaternary one, the tertiary amino group is reacted with halogenated aryl, chlorohydrin, halogenated alkyl, etc. The halogenated aryl is preferably halogenated benzyl such as benzyl chloride, etc. The chlorohydrin is ethylene chlorohydrin, propylene chlorohydrin, etc. These halides may be used alone or in combination. The method of turning the tertiary amino group to a quaternary one preferably comprises immersing the substrate having the tertiary amino group and the cation exchange group in a solution or dispersion of the above halide. The same solvent can be used as in the preparation of the amine solution. The concentration of the halide in the solution or dispersion is preferably 0.5 to 20% by mass. The immersion temperature is preferably 0 to 100°C, more preferably 20 to 90°C. The treatment time is about 10 to 50 hours, for instance, at 80°C, though different depending on the immersion temperature. The membrane formed with the quaternary amino group is dried like the above washing.

(5) Introduction of chelate-forming group

The chelate-forming group can be introduced, if necessary. The chelate-forming group is introduced after the anion exchange group and the cation exchange group is introduced into the substrate, and before the tertiary amino group is turned to a quaternary one. To introduce the chelate-forming group, the membrane is immersed in a solution or dispersion of sodium iminodiacetate, etc., such that it can be reacted with an unreacted epoxy group in the polymer of the unsaturated glycidyl compound.

[4] Properties of hydrophilic, composite, microporous membrane

The above production method provides a hydrophilic, composite, microporous membrane having a good balance of an anion exchange group and a cation exchange group on the outer surface and pore surface of the microporous, thermoplastic resin membrane substrate, with a three-dimensional network structure. The hydrophilic, composite, microporous membrane according to a preferred embodiment of this invention has the following properties.

(1) Average pore size of 0.005 to 0.5 µm

The average pore size of less than 0.005 µm provides low water permeability, and that of more than 0.5 µm provides low fine-particles-removing properties.

(2) Air permeability of 30 to 400 sec/100 cm³ (converted to the value at 20-µm thickness)

When the air permeability (JIS P8117) converted to the value at 20-µm thickness is 30 to 400 sec/100 cm³, the hydrophilic, composite, microporous membrane exhibits good water permeability when used as a water-treating membrane (water-treating reverse osmosis filtration membrane, ultrafiltration membrane, microfiltration membrane, etc.).

(3) Porosity of 25 to 80%

With the porosity of less than 25%, the hydrophilic, composite, microporous membrane does not have good water permeability and air permeability. When the porosity exceeds 80%, the hydrophilic, composite, microporous membrane has low mechanical strength.

(4) Pin puncture strength of 1,000 mN/20 µm or more

With the pin puncture strength of less than 1,000 mN/20 µm, the hydrophilic, composite, microporous membrane used as a water-treating membrane has low durability.

As described above, the hydrophilic, composite, microporous membrane has excellent mechanical strength and water permeability. Further, the hydrophilic, composite, microporous membrane has excellent capability of removing fine particles (fine metal oxide particles, etc.), anions (inorganic acid ions, etc.), and cation (metal ions, etc.). The hydrophilic, composite, microporous membrane having such properties is suitable as a water-treating membrane.

The hydrophilic, composite, microporous membrane disposed, for instance, immediately upstream of a site of washing semiconductors, etc., can remove even a trace amount of impurities from ultra-pure water, improving the production yield of semiconductors. Also, even when the hydrophilic, composite, microporous membrane is disposed immediately upstream of a use site, a booster pump is not needed, making it unnecessary to modify the pressure resistance of pipes, etc., thereby lowering the facility cost. When the hydrophilic, composite, microporous membrane is disposed immediately upstream of a use site, it is preferably charged into a case to form a flat filtration membrane module.

Because the hydrophilic, composite, microporous membrane has affinity for anions and cations, it can exhibit excellent properties in such applications as electrolytic polymer membranes for fuel cells, separators for nickel hydrogen batteries, etc. Though properly determined depending on applications, the thickness of the hydrophilic, composite, microporous membrane is usually 5 to 200 µm, preferably 5 to 100 µm when used as a water treatment membrane.

This invention will be described in more detail with reference to Examples below without intention of restricting the scope of this invention.

Example 1

(1) Production of microporous polyethylene membrane

100 parts by mass of a polyethylene (PE) composition comprising 20% by mass of ultra-high-molecular-weight polyethylene (UHMWPE) having a mass-average molecular weight (Mw) of 2.0 x 10⁶ and a molecular weight distribution (Mw/Mn) of 8, and 80% by mass of high-density polyethylene (HDPE) having Mw of 3.5 x 10⁵ and Mw/Mn of 13.5 was dry-blended with 0.375 parts by mass of tetrakis[methylene-3-(3,5-ditertiary-butyl-4-hydroxyphenyl)-propionate] methane. Measurement revealed that the PE composition comprising UHMWPE and HDPE had Mw/Mn of 16, a melting point of 135°C, and a crystal dispersion temperature of 100°C.

The Mws and Mw/Mn ratios of UHMWPE and HDPE were measured by a gel permeation chromatography (GPC) method under the flowing conditions (the same conditions applied below).
Measurement apparatus: GPC-150C available from Waters Corporation,
Column: Shodex UT806M available from Showa Denko K.K.,
Column temperature: 135°C,
Solvent (mobile phase): o-dichlorobenzene,
Solvent flow rate: 1.0 ml/minute,
Sample concentration: 0.1 % by mass (dissolved at 135°C for 1 hour),
Injected amount: 500 µl,
Detector: Differential Refractometer available from Waters Corp., and
Calibration curve: Produced from a calibration curve of a single-dispersion, standard polystyrene sample using a predetermined conversion constant.

25 parts by mass of the resultant PE composition was charged into a double-screw extruder (inner diameter = 58 mm, L/D = 42), and 75 parts by mass of liquid paraffin was supplied to the double-screw extruder via its side feeder. Melt blending was conducted at 210°C and 200 rpm to prepare a polyethylene solution in the extruder. This polyethylene solution was supplied from the double-screw extruder to a T-die, extruded therefrom in a 2.0-mm-thick sheet, and cooled by a cooling roll controlled at 40°C to form a gel-like sheet.

The gel-like sheet was simultaneously biaxially stretched by a continuous stretching machine to 5-fold in both MD and TD at 119.5°C. The stretched gel-like sheet was immersed in a washing bath of methylene chloride controlled at 25°C, and continuously washed. The washed membrane was air-dried at room temperature and taken by a reel. The resultant membrane was stretched again by a continuous stretching machine to 1.4-fold in TD at a speed of 15%/second and at a temperature of 110°C. The re-stretched membrane was fixed to a tenter, and heat-set at a temperature of 110°C for 30 seconds to form a microporous polyethylene membrane. The properties of the microporous polyethylene membrane were an average thickness of 31.0 µm, air permeability of 85 sec/100 ml/20 µm, a porosity of 63.5%, an average pore size of 0.085 µm, and pin puncture strength of 240 gf/20 µm. The measurement methods of the properties were as follows (the same is applicable below).

(a) Average thickness (µm)

The thickness of the microporous polyethylene membrane was measured at a 5-mm interval over a width of 30 cm by a contact thickness meter, and the measured thickness was averaged.

(b) Air permeability (sec/100 cm³/20 µm)

The air permeability P₁ of the microporous polyethylene membrane having a thickness T₁ was measured according to JIS P8117, and converted to air permeability P₂ at a thickness of 20 µm by the formula of P₂ = (P₁ x 20)/T₁.

(c) Porosity (%)

It was measured by a mass method.

(d) Pin puncture strength (mN/20 µm)

The maximum load was measured when a microporous membrane having a thickness T₁ was pricked with a needle of 1 mm in diameter with a spherical end surface (radius R of curvature: 0.5 mm) at a speed of 2 mm/second. The measured maximum load Lₐ was converted to the maximum load L_{b} at a thickness of 20 µm by the formula of L_{b} = (Lₐ x 20)/T₁, which was regarded as pin puncture strength.

(2) Graft polymerization with glycidyl methacrylate

Fixed to an aluminum frame plate of 30 cm x 30 cm, the microporous polyethylene membrane was immersed in hexane for washing, and dried. Using an electron accelerator (acceleration voltage: 3.0 MeV, and electron beams current: 5 mA), the dried membrane was irradiated with electron beams of 80 kGy in a nitrogen atmosphere. The membrane fixed to the frame plate was immersed in a deoxidized 1-%-by-mass solution of glycidyl methacrylate in methanol to conduct graft polymerization at 50°C for 30 minutes, washed with methanol, and dried. A graft ratio calculated from the mass change of the membrane per a unit area before and after the graft polymerization was 20% by mass per 100% by mass of the ungrafted microporous polyethylene membrane, which was 1.4 milliequivalent/g as the glycidyl group.

(3) Introduction of tertiary amino group

The membrane graft-polymerized with glycidyl methacrylate, which was fixed to the frame, was immersed in a 10-%-by-mass solution of dimethylamine in an IPA/water mixed solvent (IPA/water mass ratio = 11.1/88.9), to conduct the addition reaction of amine to the epoxy group at a temperature of 50°C for 1 hour, and then washed with pure water. Part of this membrane was immersed in 1-N sodium hydroxide to turn the dimethylamino group to an OH group, washed with pure water, dried, and reacted with 1-N hydrochloric acid. The titration of consumed HCl with an alkali until neutralization revealed that the amount of amine introduced was 0.5 milliequivalent/g as the glycidyl group.

(4) Introduction of sulfonic acid group

The dimethylamino-group-introduced membrane was immersed in a solution of sodium sulfite in an IPA/water mixed solvent, to react the unreacted epoxy group with sodium sulfite at a temperature of 80°C for 15 hours. The resultant membrane was washed with pure water, immersed in 1-N hydrochloric acid to cause ion exchange from sodium to H to form a sulfonic acid group, washed with pure water, and dried. Infrared spectrum confirmed that the sulfonic acid group was introduced into the membrane. Assuming that the sulfonic acid group was completely introduced into the unreacted epoxy group, the amount of the sulfonic acid group introduced was 0.9 milliequivalent/g as the glycidyl group.

(5) Conversion reaction to quaternary amino group

The microporous polyethylene membrane, into which a dimethylamino group and a sulfonic acid group were introduced, was immersed in a 10-%-by-mass solution of benzyl chloride in IPA at a temperature of 80°C for 15 hours, to turn the dimethylamino group to a quaternary one. The treated membrane was sufficiently washed with pure water, and dried to obtain a hydrophilic, composite, microporous membrane having a quaternary amino group and a sulfonic acid group.

(6) Properties

The resultant hydrophilic, composite, microporous membrane had an average thickness of 32.3 µm, air permeability of 110 sec/100 ml/20 µm, a porosity of 59.5%, and pin puncture strength of 220 gf/20 µm.

Comparative Example 1

A hydrophilic, composite, microporous membrane was produced in the same manner as in Example 1 except for introducing only a sulfonic acid group into the microporous polyethylene membrane.

Comparative Example 2

A hydrophilic, composite, microporous membrane was produced in the same manner as in Example 1 except for introducing only a quaternary amino group into the microporous polyethylene membrane.

Comparative Example 3

The membranes of Comparative Examples 1 and 2 were laminated to produce a hydrophilic, composite, microporous membrane.

Each hydrophilic, composite, microporous membrane of 5 cm x 5 cm obtained in Example 1 and Comparative Examples 1 to 3 was charged into a case to produce a flat filtration membrane module, and its water permeability and filtering properties (properties of removing fine silica particles, anions and metal ions) was measured by the following methods using water containing the components shown in Table 1. The results are shown in Table 2.

Table 1

| Components in Water | |
|---|---|
| Fine Silica Particles⁽¹⁾ (/ml)⁽²⁾ | 100 |
| Anions⁽³⁾ | |
| NO₃⁻ (ppb) | 16 |
| SO₄²⁻ (ppb) | 9 |
| Cl⁻ (ppb) | 29 |
| Metal Ions⁽⁴⁾ | |
| Na Ion (ppb) | 11 |
| Ca Ion (ppb) | 7 |
| Fe Ion (ppb) | 7 |
| Cu Ion (ppb) | 6 |

| | |
|---|---|
| Note: (1) Particle size of less than 0.1 µm. (2) The concentration was measured by a particle counter. (3) After concentrated, water was qualitatively and quantitatively measured by ion chromatography. (4) Qualitatively and quantitatively measured by an ICP-MS method. | |

(a) Water permeation speed (L/hr/m²/atm)

1 L of water was caused to pass through the flat filtration membrane module at room temperature and a pressure of 50.54 kPa (380 mmHg) to measure the time taken for water to pass through (water permeation time). The water permeation speed was determined by the following equation: Water permeation speed (L/hr/m²/atm) = amount of water passed (L) / time (hr) / membrane size (m²) / pressure (atm).

(b) Measurement of concentration of fine silica particles

Water was caused to pass through the flat filtration membrane module under the above conditions, and the concentration (/ml) of fine silica particles was measured by a particle counter before and after filtration.

(c) Measurement of anion concentrations

Water was caused to pass through the flat filtration membrane module under the above conditions, and water was concentrated before and after filtration. Anions were qualitatively and quantitatively measured by an ICP-MS (inductively coupled plasma mass spectroscopy) method, and the concentrations (ppb) of anions were expressed as those of the unconcentrated water.

(d) Measurement of concentrations of metal ions

Water was caused to pass through the flat filtration membrane module under the above conditions, and metal ions were qualitatively and quantitatively measured by the ICP-MS method before and after filtration to determine the concentrations (ppb) of metal ions.

Table 2

| No. | Example 1 | Comparative Example 1 | Comparative Example 2 | Comparative Example 3 |
|---|---|---|---|---|
| Properties Of Hydrophilic, Composite Microporous Membrane | | | | |
| Quaternary Amino Group | Yes (0.5 ME/g)⁽¹⁾ | No | Yes | Yes |
| Sulfonic Acid Group | Yes (0.9 ME/g)⁽²⁾ | Yes | No | Yes |
| Average Thickness (µm) | 32.3 | 33 | 31.8 | 63.5 |
| Air Permeability (sec/100 cm³/20 µm) | 110 | - | - | - |
| Porosity (%) | 59.5 | - | - | - |
| Pin Puncture Strength (gf/20 µm) | 220 | - | - | - |

| Water Permeability and Filtration Properties of Hydrophilic, Composite Microporous Membrane | | | | |
|---|---|---|---|---|
| Water Permeation Speed (L/hr/m²/atm) | 820 | 790 | 810 | 220 |

| Components in Treated water | | | | |
|---|---|---|---|---|
| Fine Silica Particles⁽³⁾ (/ml)⁽⁴⁾ | < 5 | < 5 | < 5 | < 5 |
| Anions⁽⁵⁾ | | | | |
| NO₃⁻ (ppb) | < 0.1 | 15 | < 0.1 | < 0.1 |
| SO₄²⁻ (ppb) | < 0.1 | 10 | < 0.1 | < 0.1 |
| Cl⁻ (ppb) | < 0.1 | 30 | < 0.1 | < 0.1 |
| Metal Ions⁽⁶⁾ | | | | |
| Na Ion (ppb) | < 0.1 | < 0.1 | 10 | < 0.1 |
| Ca Ion (ppb) | < 0.1 | < 0.1 | 6 | < 0.1 |
| Fe Ion (ppb) | < 0.1 | < 0.1 | 6 | < 0.1 |
| Cu Ion (ppb) | < 0.1 | < 0.1 | 6 | < 0.1 |

| | | | | |
|---|---|---|---|---|
| Note: (1) Measured value (unit: milliequivalent/g), which was converted to the amount of the glycidyl group. (2) Theoretical value (unit: milliequivalent/g), which was converted to the amount of the glycidyl group. (3) Particle size: less than 0.1 µm. (4) The concentration was measured by a particle counter. (5) After concentrated, the filtrated water was qualitatively and quantitatively measured by ion chromatography. (6) Qualitatively and quantitatively measured by the ICP-MS method. | | | | |

As is clear from Table 2, the hydrophilic, composite, microporous membrane of Example 1, though being as thin as 32.3 µm, was excellent in all of the pin puncture strength, the water permeability, the fine-particles-removing properties, the anion-removing properties and the cation-removing properties. On the other hand, the membrane of Comparative Example 1, which did not have any one of primary to quaternary amino groups, had no anion-removing properties. The membrane of Comparative Example 2, which did not have a sulfonic acid group, had no cation-removing properties. The membrane of Comparative Example 3, which was as thick as substantially 2-fold of the membrane of Example 1, had much poorer water permeability.

Example 2

(1) Graft polymerization with glycidyl methacrylate

The same microporous polyethylene membrane as in Example 1 was washed, dried, and irradiated with electron beams in the same manner as in Example 1. The irradiated membrane was graft-polymerized with GMA in the same manner as in Example 1 except that the treatment time was 15 minutes. Part of the membrane was cut out, washed with methanol, and dried. The measurement of mass change per a unit area before and after graft polymerization revealed that the graft ratio was 11 % by mass per 100% by mass of the ungrafted, microporous polyethylene membrane. This graft ratio was converted to the amount of the glycidyl group, which was 0.77 milliequivalent/g.

(2) Graft polymerization with methacrylic acid

The membrane graft-polymerized GMA was immersed in a 1-%-by-mass solution of methacrylic acid in methanol at 50°C for 40 minutes for graft polymerization. Part of the membrane was cut out, washed with methanol, and dried. The measurement of mass change per a unit area before and after graft polymerization revealed that the graft ratio of the methacrylic acid was 11 % by mass per 100% by mass of the ungrafted, microporous polyethylene membrane. This graft ratio was converted to the amount of the carboxyl group, which was 0.83 milliequivalent/g.

(3) Introduction of tertiary amino group

The carboxyl-group-introduced membrane was immersed in a 10-%-by-mass solution of dimethylamine in an IPA/water mixed solvent (IPA/water mass ratio = 11.1/88.9) at a temperature of 50°C for 1 hour to cause the addition reaction of amine to the epoxy group, and washed with pure water. Part of this membrane was immersed in 1-N sodium hydroxide to turn the dimethylamino group to OH, washed with pure water, and dried. Reacted with 1-N hydrochloric acid, the amount of HCl consumed was titrated with an alkali to determine the amount of amine introduced. The amount of dimethylamino group was 0.70 milliequivalent/g.

(4) Conversion reaction to quaternary amino group

The microporous polyethylene membrane, into which a dimethylamino group and a carboxyl group were introduced, was immersed in a 10-%-by-mass solution of benzyl chloride in IPA at a temperature of 80°C for 15 hours to turn the dimethylamino group to a quaternary one. The resultant membrane was washed with pure water, and dried to obtain a hydrophilic, composite, microporous membrane having a quaternary amino group and a carboxyl group. This hydrophilic, composite, microporous membrane had an average thickness of 33.5 µm, air permeability of 120 sec/100 ml/20 µm, a porosity of 58.5%, and pin puncture strength of 225 gf/20 µm.

Example 3

A microporous polyethylene membrane having a quaternary amino group in an amount of 0.68 milliequivalent/g (converted to the dimethylamino group) was produced in the same manner as in Example 2 except that methacrylic acid was not grafted. The resultant quaternary-amino-group-containing, microporous polyethylene membrane was exposed to a plasma gas generated at an output of 1.5 kW in an argon atmosphere while being conveyed by a roll at a speed of 0.3 m/min, to form a hydrophilic, composite, microporous membrane having a carboxyl group. Infrared spectrum measurement revealed an absorption peak at 1,720 cm⁻¹, confirming that the carboxyl group was introduced into the hydrophilic, composite, microporous membrane.

Comparative Example 4

A hydrophilic, composite, microporous membrane was produced in the same manner as in Example 2 except that only a carboxyl group was introduced into the microporous polyethylene membrane.

Comparative Example 5

A hydrophilic, composite, microporous membrane was produced in the same manner as in Example 2, except that only a quaternary amino group was introduced into the microporous polyethylene membrane.

Comparative Example 6

The membranes of Comparative Examples 4 and 5 were laminated to produce a hydrophilic, composite, microporous membrane.

Each hydrophilic, composite, microporous membrane of 5 cm x 5 cm obtained in Examples 2 and 3 and Comparative Examples 4 to 6 was charged into a case to produce a flat filtration membrane module, and subjected to a water permeability test and a filtration test under the same conditions as above except for using water having the components shown in Table 3. The results are shown in Table 4.

Table 3

| Components in Water | |
|---|---|
| Fine Silica Particles⁽¹⁾ (/ml)⁽²⁾ | 100 |
| Anions⁽³⁾ | |
| SO₄²⁻ (ppb) | 9 |
| Cl⁻ (ppb) | 20 |
| Metal Ions⁽⁴⁾ | |
| Ca Ion (ppb) | 11 |
| Cu Ion (ppb) | 6 |

| | |
|---|---|
| Note: (1)-(4) Same as in Table 1. | |

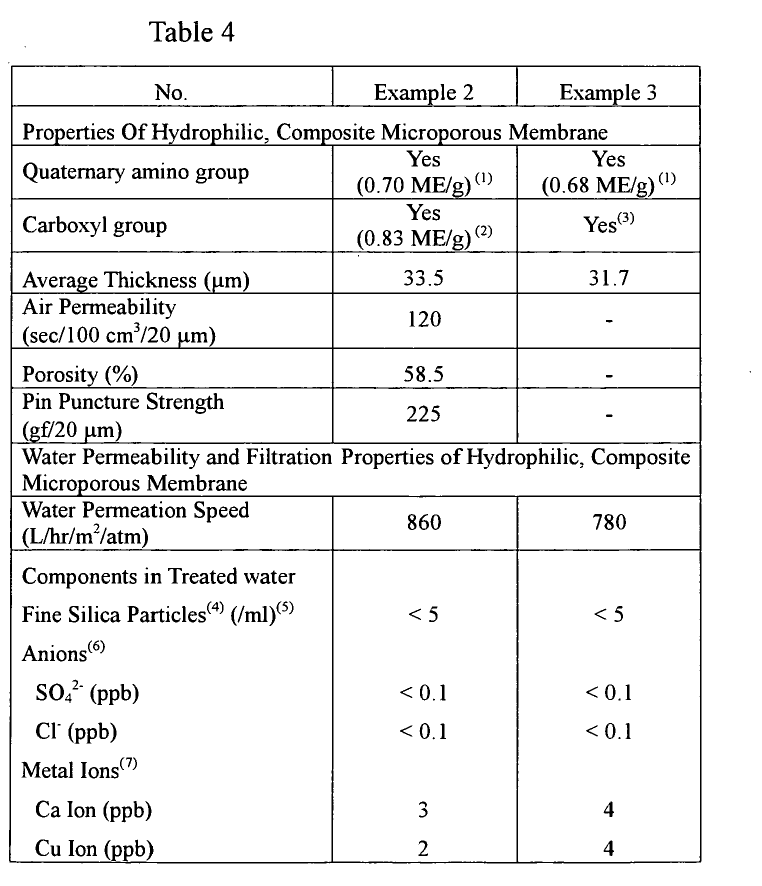

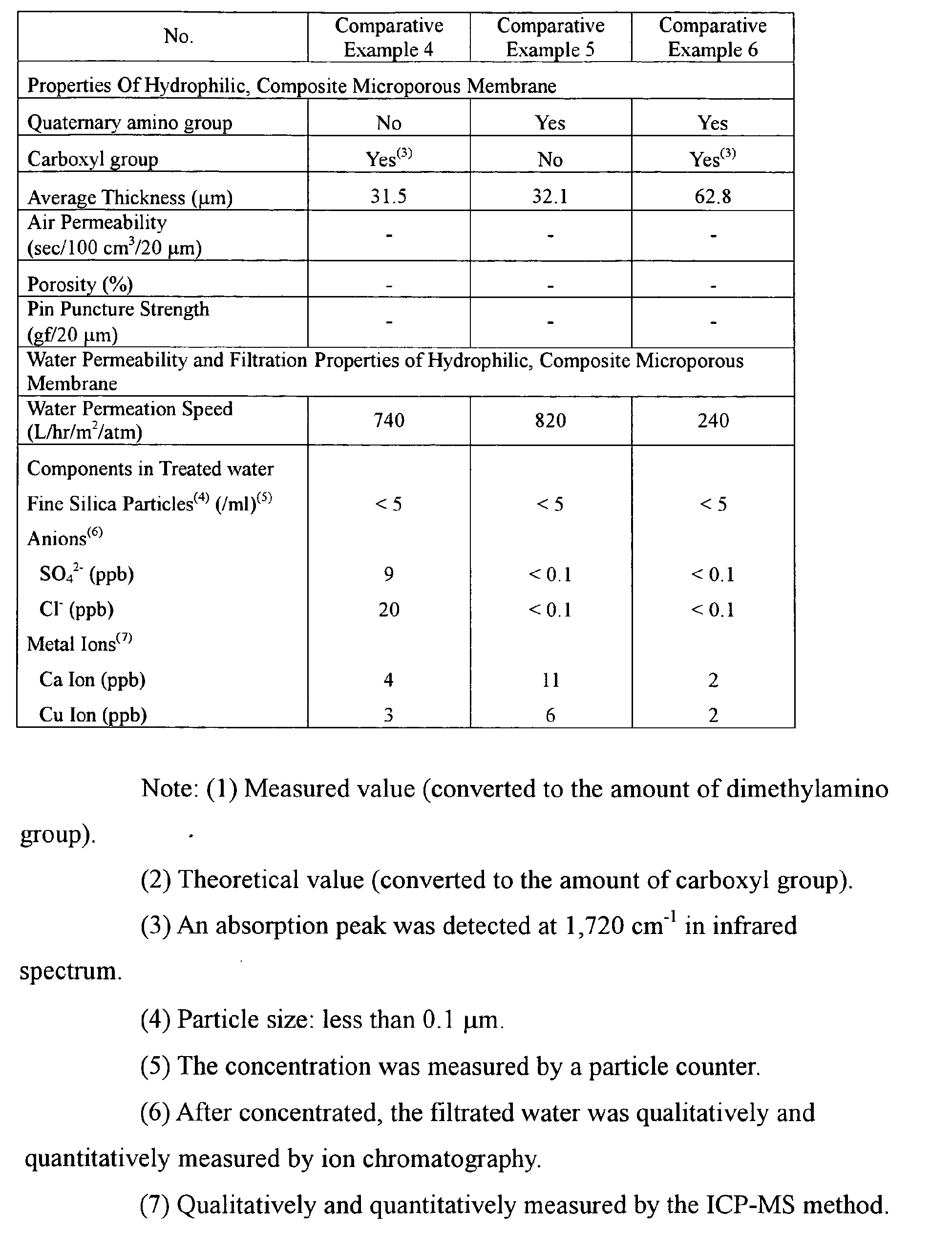

As is clear from Table 4, the hydrophilic, composite, microporous membrane of Example 2 was as thin as 33.5 µm, and had excellent pin puncture strength. The hydrophilic, composite, microporous membranes of Examples 2 and 3 were excellent in all of water permeability, fine-particles-removing properties, anion-removing properties and cation-removing properties. On the other hand, the membrane of Comparative Example 4, which did not contain any one of primary to quaternary amino groups, had no anion-removing properties. The membrane of Comparative Example 5 containing no carboxyl group did not have cation-removing properties. The membrane of Comparative Example 6, which was as thick as substantially 2-fold of Examples 2 and 3, had much poorer water permeability.

### EFFECT OF THE INVENTION

The hydrophilic, composite, microporous membranes of this invention having excellent water permeability, mechanical strength, fine-particles-removing properties, anion-removing properties and cation-removing properties are suitable as reverse osmosis filtration membranes, ultrafiltration membranes, microfiltration membranes, etc. for treating water. According to the production method of this invention, a good balance of an anion exchange group and a cation exchange group can be added onto the outer surface and pore surface of the microporous, thermoplastic resin membrane.

## Claims

1. A hydrophilic, composite, microporous membrane having an anion exchange group and a cation exchange group on the outer surface or pore surface of a microporous, thermoplastic resin membrane substrate.

2. The hydrophilic, composite, microporous membrane according to claim 1, wherein the anion exchange group is any one of primary to quaternary amino groups and heterocyclic amine groups.

3. The hydrophilic, composite, microporous membrane according to claim 1 or 2, wherein the cation exchange group is a sulfonic acid group or a carboxyl group.

4. A method for producing the hydrophilic, composite, microporous membrane recited in any one of claims 1-3, comprising the steps of graft-polymerizing a microporous, thermoplastic resin membrane substrate with an unsaturated glycidyl compound, and adding an anion exchange group and a cation exchange group to an epoxy group in the resultant polymer.

5. A method for producing the hydrophilic, composite, microporous membrane recited in any one of claims 1-3, comprising the steps of graft-polymerizing a microporous, thermoplastic resin membrane substrate with an anion-exchange-group-containing unsaturated monomer and a cation-exchange-group-containing unsaturated monomer.

6. A method for producing the hydrophilic, composite, microporous membrane recited in any one of claims 1-3, comprising the steps of (i) graft-polymerizing a microporous, thermoplastic resin membrane substrate with a unsaturated glycidyl compound, bonding an anion exchange group to an epoxy group in the resultant polymer, and then graft-polymerizing the anion-exchange-group-containing substrate with a cation-exchange-group-containing unsaturated monomer, or (ii) graft-polymerizing a microporous, thermoplastic resin membrane substrate with an unsaturated glycidyl compound and a cation-exchange-group-containing unsaturated monomer, and then bonding an anion exchange group to an epoxy group in the resultant polymer.

7. A method for producing the hydrophilic, composite, microporous membrane recited in any one of claims 1-3, comprising the steps of (i) graft-polymerizing a microporous, thermoplastic resin membrane substrate with an unsaturated glycidyl compound and an anion-exchange-group-containing unsaturated monomer, and then bonding a cation exchange group to an epoxy group in the resultant polymer, (ii) graft-polymerizing a microporous, thermoplastic resin membrane substrate with an unsaturated glycidyl compound, bonding a cation exchange group to an epoxy group in the resultant polymer, and then graft-polymerizing the resultant cation-exchange-group-containing substrate with an anion-exchange-group-containing unsaturated monomer.

8. A method for producing the hydrophilic, composite, microporous membrane recited in any one of claims 1-3, comprising the steps of graft-polymerizing a microporous, thermoplastic resin membrane substrate with an unsaturated glycidyl compound, bonding an anion exchange group to an epoxy group in the resultant polymer, and then subjecting the resultant anion-exchange-group-containing substrate to a plasma gas treatment or a corona discharge treatment to form a carboxyl group.

9. A method for producing the hydrophilic, composite, microporous membrane recited in any one of claims 1-3, comprising the steps of graft-polymerizing a microporous, thermoplastic resin membrane substrate with an anion-exchange-group-containing unsaturated monomer, and then subjecting the resultant anion-exchange-group-containing substrate to a plasma gas treatment or a corona discharge treatment to form a carboxyl group.
